(19) Europäisches Patentamt
European Patent Office
Office européen des brevets

(11)  **EP 2 153 601 B1**

(12)  **FASCICULE DE BREVET EUROPEEN**

(45) Date de publication et mention
de la délivrance du brevet:
**15.10.2014  Bulletin 2014/42**

(21) Numéro de dépôt: **08805876.3**

(22) Date de dépôt: **28.05.2008**

(51) Int Cl.:
**H04L 27/26** *(2006.01)*

(86) Numéro de dépôt international:
**PCT/FR2008/050932**

(87) Numéro de publication internationale:
**WO 2008/152304 (18.12.2008 Gazette 2008/51)**

(54) **PROCÉDÉ DE SYNCHRONISATION D'UN SIGNAL MULTIPORTEUSE, PROCÉDÉ D'ÉMISSION, DISPOSITIFS ET PROGRAMMES D'ORDINATEUR CORRESPONDANTS**

VERFAHREN ZUR SYNCHRONISATION EINES MEHRTRÄGERSIGNALS, SENDEVERFAHREN, SOWIE ENTSPRECHENDE EINRICHTUNGEN UND COMPUTERPROGRAMME

METHOD OF SYNCHRONIZING A MULTICARRIER SIGNAL, CORRESPONDING EMISSION METHOD, DEVICES AND COMPUTER PROGRAMS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **31.05.2007  FR 0703898**

(43) Date de publication de la demande:
**17.02.2010  Bulletin 2010/07**

(73) Titulaire: **Orange**
**75015 Paris (FR)**

(72) Inventeurs:
• **JAHAN, Bruno**
  **F-35190 Tinteniac (FR)**
• **LANOISELEE, Marc**
  **F-35200 Rennes (FR)**

(56) Documents cités:
**FR-A- 2 790 344     US-A1- 2006 250 939**

• **BAOGUO YANG ET AL: "Timing Recovery for OFDM Transmission" IEEE JOURNAL ON SELECTED AREAS IN COMMUNICATIONS, IEEE SERVICE CENTER, PISCATAWAY, US, vol. 18, no. 11, novembre 2000 (2000-11), XP011055250 ISSN: 0733-8716**

EP 2 153 601 B1

**Description**

**1. Domaine de l'invention**

Le domaine de l'invention est celui de la transmission d'informations numériques, notamment à haut débit, sur une bande de fréquence limitée.

Plus précisément, l'invention concerne une technique de synchronisation d'un signal à porteuses multiples comprenant des éléments de référence appelés pilotes.

Notamment, mais non exclusivement, la technique selon l'invention est bien adaptée à la transmission de signaux à porteuses multiples ayant subi une modulation de type OFDM/OQAM (en anglais « Orthogonal Frequency Division Multiplexing / Offset Quadrature Amplitude Modulation »), pour lesquelles les porteuses sont mises en forme par une fonction prototype.

**2. Art antérieur**

On connaît à ce jour des techniques de synchronisation d'un signal OFDM basées sur l'utilisation d'un intervalle de garde ou d'un préfixe cyclique inséré dans ce signal OFDM.

Plus précisément, ces techniques mettent en oeuvre une corrélation entre l'intervalle de garde et la fin d'un symbole OFDM. Cette corrélation permet d'obtenir une première synchronisation "grossière", affinée ensuite par d'autres techniques (telles que, par exemple, l'exploitation de la réponse impulsionnelle issue de l'estimation du canal de transmission).

Classiquement, ces techniques de synchronisation utilisent cet intervalle de garde inséré dans le signal pour déterminer, en réception, le bon positionnement d'une fenêtre FFT sur un symbole reçu.

Un inconvénient de ces techniques de l'art antérieur réside dans le fait qu'elles nécessitent l'utilisation d'un intervalle de garde ou d'un préfixe cyclique, qui doit donc être inséré dans le signal, dégradant l'efficacité spectrale.

En particulier, ces techniques de l'art antérieur ne sont pas applicables aux modulations OFDM/OQAM ne présentant pas, par définition, d'intervalle de garde.

De plus, comme montré dans le document "Coded Orthogonal Frequency Division Multiplex", Proceedings in the IEEE, vol 83, Juin 1995, de B.LE FLOCH, M.ALARD et C.BERROU, ces techniques de l'art antérieur ne permettent pas d'obtenir une bonne synchronisation temporelle pour des modulations de types OFDM/QAM et OFDM/OQAM/NYQUIST.

US 2006/025 937 propose une synchronisation d'un signal multiporteuse par une corrélation d'un seul pilote avec son image enregistrée.

**3. Exposé de l'invention**

L'invention propose une solution nouvelle qui ne présente pas l'ensemble de ces inconvénients de l'art antérieur, sous la forme d'un procédé de synchronisation d'un signal multiporteuse reçu par un récepteur, ledit signal multiporteuse comprenant à l'émission un ensemble d'éléments de données et un ensemble d'éléments de référence appelés pilotes, la valeur et l'emplacement desdits pilotes à l'émission étant connus dudit récepteur.

Selon l'invention, un tel procédé comprend les étapes suivantes :

- obtention par ledit récepteur d'une séquence d'un signal de référence, dite séquence de référence, représentative de l'emplacement d'au moins un desdits pilotes dudit signal multiporteuse ;
- obtention par ledit récepteur d'une séquence dudit signal reçu, dite séquence de détermination ;
- détermination, pour ladite séquence de détermination, d'un pic de synchronisation, à partir d'une corrélation entre ladite séquence de référence et ladite séquence de détermination ;
- synchronisation d'au moins une séquence suivant temporellement ladite séquence de détermination, à partir dudit pic de synchronisation.

Ainsi, l'invention repose sur une approche nouvelle et inventive de la synchronisation d'un signal multiporteuse, basée sur une corrélation entre ce signal reçu et un signal de référence connu du récepteur.

La corrélation est effectuée sur une portion du signal reçu, appelée séquence de détermination, et une séquence de référence, afin de synchroniser la séquence suivante, temporellement parlant, du signal reçu.

Ainsi, le procédé de synchronisation selon l'invention tire parti des caractéristiques du signal émis, notamment des pilotes insérés dans le signal, pour déterminer un pic de synchronisation dans une séquence du signal reçu, permettant de synchronisation la séquence suivante du signal reçu.

Dans un premier temps, le récepteur acquiert les deux séquences, de référence et de détermination, qui lui servent ensuite à effectuer la corrélation.

Selon une première variante de l'invention, ladite étape d'obtention d'une séquence de référence comprend une étape de réception par ledit récepteur d'un signal comprenant des pilotes situés aux mêmes emplacements temps/fréquence que les pilotes dudit signal multiporteuse.

Ainsi, afin d'effectuer la synchronisation d'un signal OFDM multiporteuse, le récepteur reçoit un signal particulier, représentatif des pilotes du signal multiporteuse à synchroniser, appelé signal de référence.

Selon une deuxième variante de l'invention, ladite étape d'obtention d'une séquence de référence comprend une étape de génération d'un signal de référence comprenant des pilotes situés aux mêmes emplacements temps/fréquence que les pilotes dudit signal multiporteuse.

Le récepteur dans ce cas est capable de générer un signal de référence, représentatif des pilotes du signal multiporteuse à synchroniser.

Dans ces deux variantes, le récepteur extrait une séquence de ce signal de référence, appelée séquence de référence, qui lui permet de définir la longueur de la corrélation effectuée pour la synchronisation du signal multiporteuse reçu.

La longueur de la séquence de référence est notamment dépendante de l'emplacement des pilotes et de leur récurrence.

De plus, la longueur de la séquence de référence permet de déterminer la longueur de la séquence de détermination du signal reçu.

En particulier, ladite séquence de détermination est de même longueur que ladite séquence de référence.

Ainsi, la corrélation est effectuée sur deux séquences, de référence et de détermination, de même longueur.

La corrélation peut cependant s'effectuer avec une séquence de détermination plus courte, par exemple pour résister à un effet Doppler. La corrélation peut également s'effectuer avec une séquence de détermination sous-échantillonnée, par exemple pour diminuer la complexité de calcul de corrélation, au détriment cependant de la robustesse de la synchronisation vis-à-vis du bruit.

Selon une caractéristique particulière de l'invention, ladite étape de détermination d'un pic de synchronisation comprend :

- une étape de corrélation de ladite séquence de détermination et de ladite séquence de référence, délivrant une réponse de corrélation ;
- une étape de filtrage de ladite réponse de corrélation, délivrant une réponse de corrélation filtrée ;
- une étape de détection d'un pic de synchronisation à partir de ladite réponse de corrélation filtrée, délivrant une information de position correspondant audit pic de synchronisation.

Ainsi, la détermination d'un pic de synchronisation est effectuée en plusieurs étapes successives, s'appliquant chacune sur la sortie de l'étape précédente et permettant ainsi d'optimiser la détection du pic de synchronisation.

Une fois la corrélation mise en oeuvre et ayant délivré une réponse de corrélation, un filtrage est appliqué sur cette réponse de corrélation, délivrant une réponse de corrélation filtrée. Cette réponse de corrélation filtrée permet de mieux discriminer l'échantillon correspondant au pic de synchronisation des autres échantillons.

La détection du pic de synchronisation s'effectue sur la réponse de corrélation filtrée.

Selon l'invention, ledit pic de synchronisation correspond au pic présentant la plus grande amplitude dans ladite réponse de corrélation filtrée.

La détection du pic de synchronisation délivre donc une information de position, correspondant à une position d'un échantillon discret de ladite séquence de détermination.

Selon un aspect particulier de l'invention, ladite étape de détermination d'un pic de synchronisation comprend également une étape de mise en forme de ladite réponse de corrélation filtrée, délivrant une réponse de corrélation améliorée, et ladite étape de détection d'un pic de synchronisation s'effectue à partir de ladite réponse de corrélation améliorée.

Ainsi, afin d'améliorer les performances de la synchronisation, un autre traitement peut être appliqué sur le signal en sortie du filtrage, c'est-à-dire sur la réponse de corrélation filtrée. Ce traitement correspond à une mise en forme de la réponse de corrélation filtrée et délivre une réponse de corrélation améliorée.

Dans ce cas, ledit pic de synchronisation correspond au pic présentant la plus grande amplitude dans ladite réponse de corrélation améliorée.

Selon une première variante de l'invention, ladite étape de mise en forme comprend :

- une première étape de filtrage soustractif de ladite réponse de corrélation filtrée avec au moins une version décalée temporellement de ladite réponse de corrélation filtrée, délivrant une réponse intermédiaire ;
- une deuxième étape de filtrage additif de ladite réponse intermédiaire avec au moins une version décalée temporellement de ladite réponse intermédiaire, délivrant ladite réponse de corrélation améliorée.

Ainsi, cette étape de mise en forme met en oeuvre deux traitements successifs, utilisant des décalages temporels du signal sur lequel sont appliqués les traitements. Ces deux traitements correspondent à deux formes de filtrage, soustractif et additif, permettant d'améliorer la qualité de la détection du pic de synchronisation.

Selon une deuxième variante, ladite étape de mise en forme correspond à une deuxième corrélation effectuée à l'aide de ladite réponse de corrélation filtrée et délivrant une réponse de corrélation améliorée.

Ainsi, le signal en sortie du filtrage, notée réponse de corrélation filtrée, peut être utilisé comme une deuxième séquence de référence pour une deuxième opération de corrélation, délivrant une réponse de corrélation améliorée.

Une fois le pic de synchronisation détecté, le procédé de synchronisation selon l'invention effectue la synchronisation proprement dite du signal multiporteuse reçu, ladite étape de synchronisation comprenant, pour la séquence suivant temporellement ladite séquence de détermination :

- une comparaison d'une position d'un échantillon discret de ladite séquence suivante avec ladite information de position ;
- une génération d'un "top" de synchronisation quand le résultat de la comparaison est positif.

Ainsi, le procédé de synchronisation utilise le pic de synchronisation détecté sur la séquence de détermination pour synchroniser la séquence suivante dans le signal reçu. Pour ce faire, le procédé génère un "top" de synchronisation à un instant de la séquence suivante correspondant à un échantillon se trouvant à la position délivrée précédemment par l'information de position.

Ce "top" de synchronisation est donc généré, pour la séquence suivant la séquence de détermination, au moment où, sur la séquence de détermination, un pic du signal avait été détecté.

Un autre aspect de l'invention concerne un procédé d'émission d'un signal multiporteuse comprenant un ensemble d'éléments de données et un ensemble d'éléments de référence appelés pilotes, la valeur et l'emplacement desdits pilotes à l'émission étant connus d'au moins un récepteur destiné à effectuer une réception dudit signal multiporteuse.

Selon l'invention, ce procédé d'émission comprend les étapes suivantes :

- émission d'un signal de référence comprenant des pilotes situés aux mêmes emplacements temps/fréquence que les pilotes dudit signal multiporteuse ;
- émission dudit signal multiporteuse.

Selon un aspect particulier de l'invention, ledit signal multiporteuse est de type OFDM/OQAM ou BFDM/OQAM.

Selon une caractéristique particulière de l'invention, ledit ensemble de pilotes est composé d'un préambule et/ou de pilotes répartis.

L'invention concerne encore un dispositif de synchronisation d'un signal multiporteuse reçu par un récepteur, ledit signal multiporteuse comprenant à l'émission un ensemble d'éléments de données et un ensemble d'éléments de référence appelés pilotes, la valeur et l'emplacement desdits pilotes à l'émission étant connus dudit récepteur.

Selon l'invention, un tel dispositif comprend :

- des moyens d'obtention par ledit récepteur d'une séquence d'un signal de référence, dite séquence de référence, représentative de l'emplacement d'au moins un desdits pilotes dudit signal multiporteuse ;
- des moyens d'obtention par ledit récepteur d'une séquence dudit signal reçu, dite séquence de détermination ;
- des moyens de détermination, pour ladite séquence de détermination, d'un pic de synchronisation, à partir d'une corrélation entre ladite séquence de référence et ladite séquence de détermination ;
- des moyens de synchronisation d'au moins une séquence suivant temporellement ladite séquence de détermination, à partir dudit pic de synchronisation.

Un tel dispositif de synchronisation est notamment adapté à mettre en oeuvre le procédé de synchronisation décrit précédemment. Il s'agit par exemple d'une station de base ou d'un terminal portable, d'un récepteur ...

L'invention concerne également un dispositif d'émission d'un signal multiporteuse comprenant un ensemble d'éléments de données et un ensemble d'éléments de référence appelés pilotes, la valeur et l'emplacement desdits pilotes à l'émission étant connus d'au moins un récepteur destiné à effectuer une réception dudit signal multiporteuse.

Un tel dispositif d'émission comprend :

- des moyens d'émission d'un signal de référence comprenant des pilotes, situés aux mêmes emplacements temps/fréquence que les pilotes dudit signal multiporteuse ;
- des moyens d'émission dudit signal multiporteuse.

# EP 2 153 601 B1

Un tel dispositif d'émission est notamment adapté à mettre en oeuvre le procédé d'émission décrit précédemment. Il s'agit par exemple d'une station de base ou d'un terminal portable, d'un émetteur ...

Un autre aspect de l'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de synchronisation décrit précédemment.

Enfin, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission décrit précédemment.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 décrit les principales étapes du procédé de synchronisation selon un mode de réalisation de l'invention ;
- la figure 2a présente un exemple de trame d'un signal OFDM/OQAM ;
- la figure 2b illustre un exemple de système de transmission dans lequel est mis en oeuvre le procédé de synchronisation selon un mode de réalisation de l'invention, pour un signal tel que décrit en figure 2a ;
- la figure 3 décrit les étapes détaillées du procédé de synchronisation selon un mode de réalisation de l'invention ;
- les figures 4a et 4b présentent des exemples de signaux de corrélation ;
- les figures 5a et 5b présentent respectivement un exemple d'implémentation de l'étape de corrélation du procédé de synchronisation selon un mode de réalisation de l'invention et un exemple de signal en sortie de cette étape de corrélation ;
- la figure 6 illustre un exemple d'implémentation de l'étape de filtrage du procédé de synchronisation selon un mode de réalisation de l'invention ;
- les figures 7a et 7b présentent respectivement un exemple d'implémentation du premier niveau (filtrage soustractif) de l'étape de mise en forme du procédé de synchronisation selon un mode de réalisation de l'invention et un exemple de signal en sortie de cette étape de filtrage soustractif ;
- les figures 7c et 7d présentent respectivement un exemple d'implémentation du second niveau (filtrage additif) de l'étape de mise en forme du procédé de synchronisation selon un mode de réalisation de l'invention et un exemple de signal en sortie de cette étape de filtrage additif ;
- la figure 7e présente un exemple de signal servant de deuxième séquence de référence pour une variante de l'étape de mise en forme du procédé de synchronisation ;
- la figure 8 illustre une exemple d'algorithme de détection d'un pic de synchronisation selon un mode de réalisation particulier de l'invention ;
- les figures 9a et 9b présentent respectivement un exemple d'algorithme d'amélioration logicielle de corrélation selon un mode de réalisation de l'invention et un exemple de signal en sortie de cette amélioration ;
- la figure 10 présente la structure d'un dispositif de synchronisation mettant en oeuvre le procédé de synchronisation selon un mode de réalisation particulier de l'invention.

## 5. Description d'un mode de réalisation de l'invention

### 5. 1 Principe général

Le principe général de l'invention repose sur l'utilisation de pilotes dans un signal émis pour synchroniser un signal multiporteuse reçu, en effectuant une corrélation entre un signal de référence connu du récepteur, et comportant des pilotes situés aux mêmes emplacements temps/fréquence que les pilotes du signal multiporteuse, et le signal multiporteuse reçu.

Le procédé de synchronisation selon l'invention s'applique aux systèmes de transmission de signaux utilisant notamment la modulation OFDM.

En particulier, le procédé de synchronisation selon l'invention est particulièrement adapté aux systèmes utilisant une modulation ne présentant pas d'intervalle de garde, telle que par exemple la modulation OFDM/OQAM, dans lesquels la synchronisation ne peut donc pas être basée sur l'intervalle de garde.

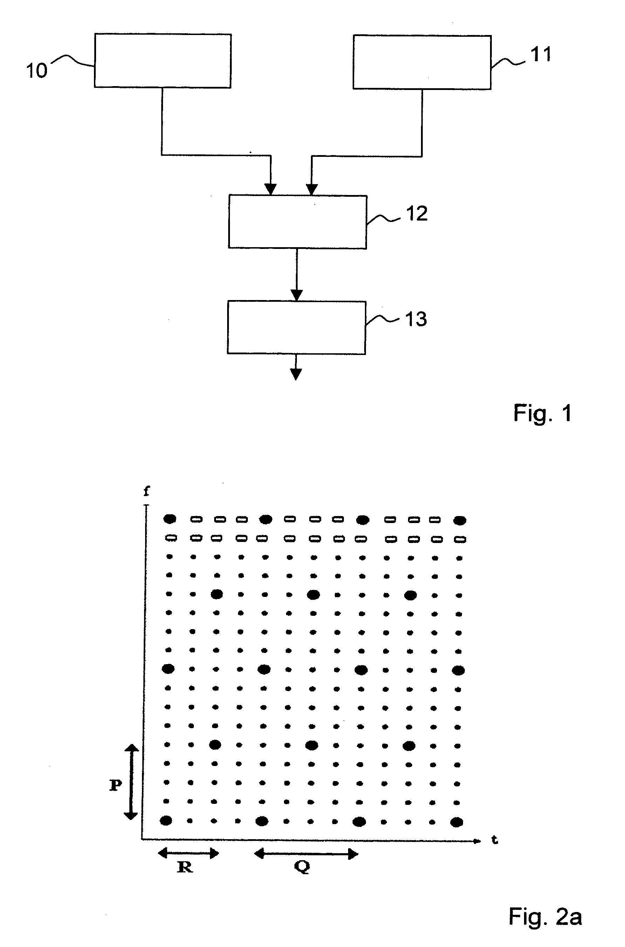

On présente les principales étapes du procédé de synchronisation selon l'invention, en relation avec la figure 1.

L'étape 10 d'obtention d'une séquence de référence consiste, pour le récepteur, à obtenir une séquence de longueur déterminée d'un signal comportant des informations représentatives des pilotes du signal multiporteuse reçu.

La longueur de cette séquence peut être définie par un nombre de symboles. Un symbole correspond à l'ensemble des informations portées par l'ensemble des porteuses à un instant t sur un segment temporel du signal.

L'étape 11 d'obtention d'une séquence de détermination, effectuée simultanément ou non avec l'étape 10, consiste pour le récepteur à extraire une séquence du signal multiporteuse reçu, comprenant des pilotes et des éléments de données.

A partir de ces deux séquences, de référence et de détermination, une étape 12 de détermination d'un pic de synchronisation est mise en oeuvre, effectuant notamment une corrélation entre ces deux séquences.

Lors de l'étape suivante 13 de synchronisation, le procédé utilise le pic de synchronisation déterminé pour synchroniser une séquence du signal reçu suivant temporellement la séquence de détermination.

On décrit ci-dessous plus en détails les différentes étapes du procédé, selon un mode de réalisation de l'invention.

*5.2 Description d'un mode de réalisation particulier*

On décrit par la suite un mode de réalisation particulier de l'invention mettant en oeuvre un signal de type OFDM/OQAM, à titre d'exemple illustratif et non limitatif. On rappelle en effet que le procédé de synchronisation selon l'invention s'applique à tout autre type de signal multiporteuse.

On présente tout d'abord, en relation avec la figure 2a, un exemple de trame d'un signal multiporteuse de type OFDM/OQAM.

Dans cet exemple, les pilotes, représentés par des grands ronds noirs, sont répartis en quinconce. Les éléments de données sont représentés par des petits ronds noirs.

Les espacements entre les pilotes sont les suivants :

- P est l'espacement fréquentiel entre deux pilotes ;
- Q est l'espacement temporel entre deux pilotes ;
- R est l'espacement temporel entre deux symboles portant des pilotes du signal OFDM/OQAM.

En particulier, dans cet exemple, on a P = Q = 4 et R = 2.

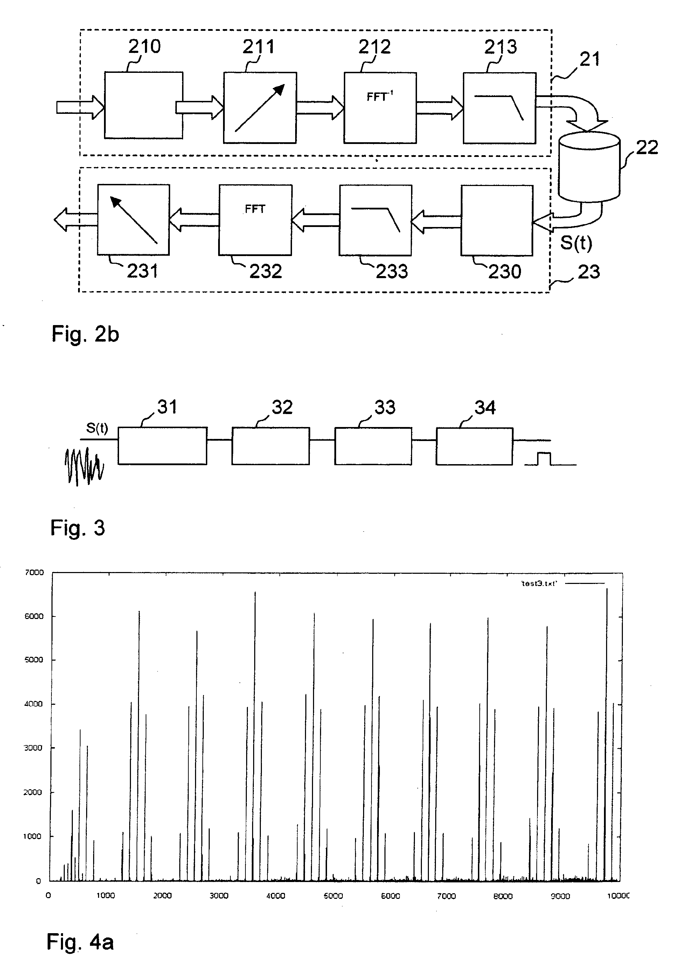

On présente maintenant, en relation avec la figure 2b, un exemple de système de transmission dans lequel est mis en oeuvre le procédé de synchronisation selon le mode de réalisation particulier de l'invention, pour un signal tel que décrit précédemment.

Le système est composé principalement de trois grandes parties 21, 22 et 23, concernant respectivement l'émission, le canal de transmission et la réception d'un signal de type OFDM/OQAM exploitant une forme d'onde particulière appelée IOTA ("Isotropic Orthogonal Transform Algorithm" en anglais).

Dans la partie émission 21, le bloc 210 représente le signal à émettre sous la forme de symboles réels, comprenant des éléments de données (éléments informatifs) et des éléments de référence (pilotes), le bloc 211 représente une opération de rotation de phase avant l'application d'une Transformée de Fourier inverse 212 (notée FFT$^{-1}$). Une fonction IOTA est ensuite mise en oeuvre avant transmission du signal ainsi obtenu via le canal de transmission 22.

Un exemple d'équation représentant un signal ainsi modulé OFDM/OQAM/IOTA est présenté ci-dessous :

$$s(t)_{OFDM/OQAM/IOTA} = \sum_{n=-\infty}^{+\infty} \sum_{m=0}^{2M-1} a_{n,m} \cdot g_{n,m} = \sum_{n=-\infty}^{+\infty} \sum_{m=0}^{2M-1} a_{n,m} \cdot i^{m+n} \cdot \Im(t - n\tau_0) \cdot e^{j2\pi m \upsilon_0 t}$$

Côté réception (bloc 23), le récepteur doit démoduler le signal multiporteuse reçu S(t), et pour cela, doit effectuer une synchronisation 230 de ce signal reçu, afin de pouvoir positionner la fenêtre FFT 232. Après la synchronisation, le récepteur met en oeuvre la fonction IOTA 233, et applique une rotation de phase inverse 231 au signal en sortie de la FFT.

Le procédé de synchronisation selon l'invention intervient donc avant la démodulation du signal en réception, car il permet notamment de positionner la fenêtre FFT du démodulateur.

On présente maintenant le procédé de synchronisation selon le mode de réalisation particulier l'invention, dans lequel le signal reçu est de type ODFM/OQAM/IOTA, comme décrit précédemment.

La synchronisation d'un signal multiporteuse selon l'invention est effectuée dans le domaine temporel par le récepteur dudit signal. Elle comprend plusieurs étapes, mises en oeuvre successivement, comme illustré en figure 3.

La première étape 31 de corrélation consiste à effectuer une corrélation entre le signal multiporteuse reçu S(t) et une séquence d'un signal de référence connue du récepteur, appelée séquence de référence.

Ce signal de référence est constitué de pilotes, situés aux mêmes emplacements temps/fréquence que dans le signal multiporteuse à synchroniser.

La longueur de la séquence de référence utilisée pour la corrélation dépend du placement, ou de la répartition des pilotes dans le signal multiporteuse.

Dans cet exemple, illustré par la figure 2a précédemment décrite, la longueur de la séquence de référence correspond à quatre symboles OFDM/OQAM/IOTA. En effet, dans cet exemple, les pilotes sont émis tous les quatre symboles pour une fréquence donnée.

Selon une première variante de ce mode de réalisation, un signal de référence est émis par un émetteur du système de transmission et reçu par le récepteur, qui en extrait une séquence de référence en vue de l'utilisation ultérieure pour la synchronisation du signal.

Selon une seconde variante, le récepteur génère lui-même cette séquence de référence, à partir d'informations représentatives du signal à synchroniser, et en particulier des pilotes.

La corrélation entre une séquence de détermination du signal multiporteuse reçu et la séquence de référence permet dans cet exemple d'obtenir des pics, appelés ci-après pics de corrélation, dont la récurrence correspond aux espacements entre pilotes.

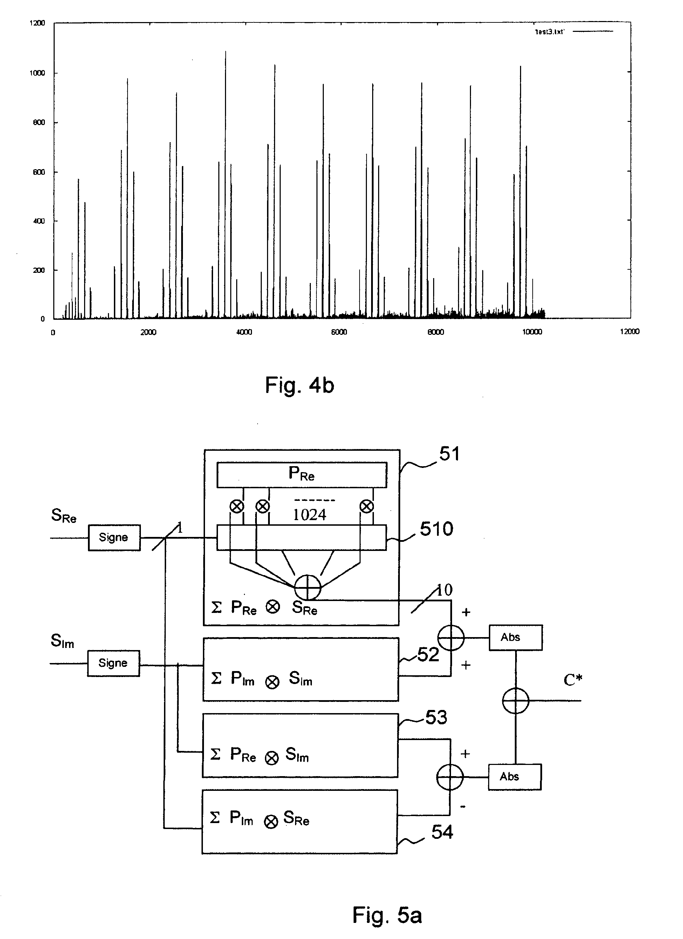

Des exemples de signaux en sortie de cette étape de corrélation, appelés signaux de corrélation, ou réponses de corrélation, sont présentés en figures 4a et 4b, respectivement pour un signal de corrélation non bruité et un signal transmis dans un canal radio mobile avec 10dB de bruit blanc additif, sous la forme de "peignes" de pics de corrélation, comprenant un pic fondamental, statistiquement celui de niveau le plus fort, et des pics parasites situés à des sous-harmoniques de la récurrence, dans cet exemple une récurrence de quatre symboles. Ces pics parasites sont liés à la répartition, en temps et en fréquence, des pilotes, et peuvent nuire à la bonne détection des pics fondamentaux, qui servent à la détermination des pics de synchronisation.

Sur ces figures 4a et 4b, l'axe des abscisses correspond aux échantillons temporels du signal, sachant qu'un symbole OFDM/OQAM/IOTA comprend 256 échantillons et une séquence de détermination comprend 1024 échantillons, et l'axe des ordonnées correspond au module du signal de corrélation.

De plus, dans le signal multiporteuse à synchroniser, les pilotes sont insérés parmi des éléments de données, qui apportent également un niveau de bruit important.

Les perturbations du canal nuisent également à l'obtention d'un signal de corrélation permettant de déterminer sans ambiguïté des pics de synchronisation.

Les étapes suivantes du procédé de synchronisation vont permettre d'améliorer la détection de pics de synchronisation, comme décrit ci-dessous.

L'étape 32 de filtrage consiste à appliquer, sur le signal en sortie de l'étape de corrélation, un filtrage à Réponse Impulsionnelle Infinie, ou filtrage RII, par moyenne pondérée par un coefficient d'oubli du signal, de quatre symboles en quatre symboles (on rappelle en effet que P=4).

Cette étape de filtrage permet d'améliorer le rapport signal à bruit, encore noté rapport S/B, du signal de corrélation et associe au pic fondamental une information de confiance.

En effet, le niveau du pic fondamental détecté correspond au niveau du pic à l'instant de la détection, ce niveau à l'instant de détection étant moyenné avec atténuation progressive avec les versions passées de ce pic, situées à des distances de n*4 symboles.

Ce filtrage, présenté plus en détails dans sa mise en oeuvre ci-dessous, a donc un effet mémoire très important, bénéfique quand le système est stabilisé, mais pénalisant en phase d'acquisition. De même, quand le signal multiporteuse reçu devient plus fort (en puissance), l'effet mémoire est pénalisant. Une troisième étape est alors mise en oeuvre dans le procédé de synchronisation selon ce mode de réalisation, afin d'améliorer les résultats en sortie du filtrage.

Cette troisième étape est une étape de mise en forme 33 du signal, de façon à discriminer le pic fondamental.

Cette mise en forme consiste en un filtrage à Réponse Impulsionnelle Finie, ou filtrage RIF, qui combine le signal en sortie du filtrage RII 32 avec des versions décalées de ce même signal, de façon à détecter sans ambiguïté le pic fondamental.

Cette mise en forme est également détaillée plus loin dans la description, notamment dans sa mise en oeuvre.

La dernière étape du procédé de synchronisation est une étape de détection 34, dans le signal en sortie de la troisième étape de mise en forme 33, d'un pic fondamental, correspondant à un pic de synchronisation sur une séquence de quatre symboles et permettant de générer un "top" de synchronisation et ainsi de synchroniser la séquence suivant temporellement la séquence de détermination du signal reçu.

On détaille maintenant la mise en oeuvre de chacune des étapes principales du procédé de synchronisation selon ce mode de réalisation particulier de l'invention.

5.2.1 Corrélation (31)

L'étape 31 de corrélation est mise en oeuvre sous la forme d'une opération complexe effectuée sur les composantes réelle $S_{Re}$ et imaginaire $S5_{Im}$, en phase et en quadrature, du signal multiporteuse reçu S(t).

Si l'on considère le signal échantillonné S(k), sur une période T de 1024 échantillons, correspondant à une séquence de détermination, la corrélation C(j) avec la séquence de référence P(i), constituée des pilotes, s'écrit :

$$C(j) = \sum_{i=1}^{T} P(i).S(i+j-T) \qquad (1)$$

On peut donc écrire de la façon suivante les composantes réelle et imaginaire du signal de corrélation C(j) :

$$C_{\text{Re}}(j) = \sum_{i=1}^{T} \left[ P_{\text{Re}}(i).S_{\text{Re}}(i+j-T) + P_{\text{Im}}(i).S_{\text{Im}}(i+j-T) \right]$$

$$C_{\text{Im}}(j) = \sum_{i=1}^{T} \left[ P_{\text{Re}}(i).S_{\text{Im}}(i+j-T) - P_{\text{Im}}(i).S_{\text{Re}}(i+j-T) \right] \qquad (2)$$

La détection des pics de corrélation, ou pics fondamentaux, s'effectue sur le module du signal de corrélation C(j), c'est-à-dire à partir du calcul de la fonction suivante :

$$|C(j)| = \sqrt{C_{\text{Re}}(j)^2 + C_{\text{Im}}(j)^2} \qquad (3)$$

On peut noter que cette fonction présente une propriété particulière, à savoir qu'elle est invariante par rotation de phase ; une telle rotation de phase peut notamment résulter d'un écart de fréquence porteuse entre l'émission du signal et la réception de ce signal.

La détection d'un pic de corrélation consiste donc à déterminer la valeur maximale du produit de corrélation, et correspond donc, de manière simplifiée, à remplacer la fonction de l'équation (3) par la somme des valeurs absolues de $C_{\text{Re}}$ et $C_{\text{Im}}$.

La mise en oeuvre matérielle de cette corrélation présente un degré de complexité important, si l'on suppose un niveau de quantification réduit sur 6 bits signés par exemple.

En effet, l'opération de corrélation telle que décrite ci-dessus nécessite 4096 (4*1024) multiplications de 6 bits par 6 bits, ainsi qu'une addition portant sur 4096 mots de 11 bits.

Une solution matérielle pour la mise en oeuvre de cette opération de corrélation consiste à considérer qu'un produit de corrélation peut être avantageusement remplacé par une fonction, ou produit logique, XNOR (« non ou exclusif ») portant uniquement sur les bits de signe des composantes $S_{\text{Re}}$ et $S_{\text{Im}}$ du signal reçu et des composantes $P_{\text{Re}}$ et $P_{\text{Im}}$ de la séquence de référence.

Les composantes réelle et imaginaire de la séquence de référence sont contenues dans deux mémoires de type ROM ("Read-Only Memory" en anglais) de 1024 bits chacune, et l'opération de corrélation consiste alors à effectuer 4096 produits XNOR suivis d'une addition portant sur 4096 bits.

On peut alors écrire le signal $C^*(j)$ en sortie de cette opération de corrélation de la façon suivante :

$$C^*(j) = \sum_{i=1}^{T} \begin{bmatrix} \left| p_{\text{Re}}(i) \otimes s_{\text{Re}}(i+j-T) + p_{\text{Im}}(i) \otimes s_{\text{Im}}(i+j-T) \right| + \\ \left| p_{\text{Re}}(i) \otimes s_{\text{Im}}(i+j-T) - p_{\text{Im}}(i) \otimes s_{\text{Re}}(i+j-T) \right| \end{bmatrix} \qquad (4)$$

où l'on a :

- $s_{\text{Re}}$, $s_{\text{Im}}$, $p_{\text{Re}}$ et $p_{\text{Im}}$ les bits de signe respectivement des parties réelle et imaginaire du signal reçu et de la séquence de référence, et
- $\otimes$ le produit XNOR.

Dans cet exemple, chacun des termes imaginaire et réel du produit de corrélation est quantifié sur 11 bits, la dynamique de quantification est donc de 1024. Le calcul de la valeur absolue revient à complémenter ou non le terme, suivant qu'il se situe en dessous ou au-dessus de la demi dynamique de quantification.

La figure 5a illustre un exemple d'implémentation matérielle du produit de corrélation tel que décrit par l'équation (4).

Les quatre blocs 51 à 54 représentent les différents produits XNOR de l'équation (4), le bloc 510, et ses équivalents non représentés sur la figure 5a, correspondant à un registre à décalage.

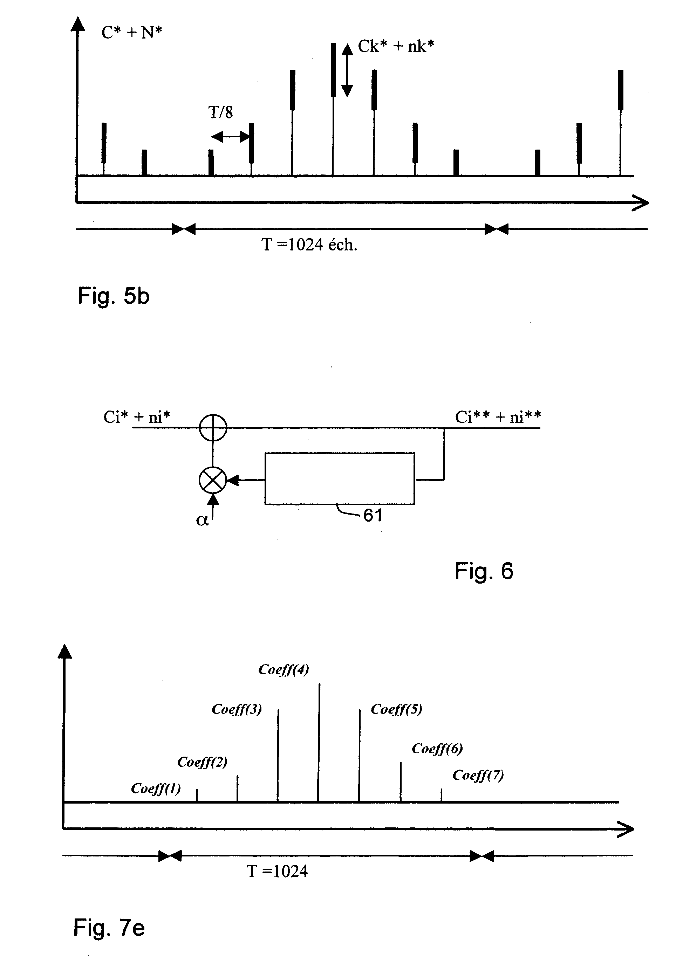

La figure 5b quant à elle présente un exemple du signal de corrélation C* en fonction du temps.

Sur ce signal, on peut observer un pic fondamental, ainsi que des pics parasites espacés de T/8. La partie supérieure de chaque pic, représentée en gras, correspond à un bruit N* affectant le signal, dû aux données transmises en même temps que les pilotes ainsi qu'aux perturbations du canal de transmission.

On peut constater qu'en fonction de ce bruit, il est parfois impossible de discriminer sans erreur le pic fondamental. En effet, la variation d'amplitude affectant chaque pic peut placer le pic fondamental en dessous d'un ou de plusieurs pics parasites voisins.

La mise en oeuvre de l'étape suivante de filtrage va permettre d'améliorer la discrimination du pic fondamental.

<u>5.2.2 Filtrage RII (32)</u>

La figure 6 illustre le principe du filtrage mis en oeuvre dans le procédé de synchronisation selon l'invention, et correspondant à l'étape 32 de la figure 3.

Le signal d'entrée, correspondant à la réponse de corrélation, c'est-à-dire le signal C* en sortie de l'étape de corrélation décrite précédemment affecté d'un bruit N*, ressort du filtrage RII additionné avec la version retardée, d'une période T, de la sortie, pondérée par un facteur $\alpha$.

Le retard est mis en oeuvre par une ligne à retard 61 de 1024 échantillons correspondant à la période T.

Le signal en sortie de ce filtrage peut s'écrire de la manière suivante :

$$C_i^{**} + n_i^{**} = \sum_{n=0}^{\infty} \alpha^n (C_{i-n.1024}^{*} + n_{i-n.1024}^{*}) \qquad (5)$$

On peut considérer que les termes $C_{i-n.1024}^{*}$ et $C_{i-(n-1).1024}^{*}$ sont très proches et que $n_{i-n.1024}^{*}$ et $n_{i-(n-1).1024}^{*}$, distants de 1024 échantillons, sont statistiquement indépendants et de même variance. L'équation (5) peut alors s'écrire, de façon simplifiée, comme suit :

$$C_i^{**} + n_i^{**} = \frac{1}{1-\alpha}.C_i^{*} + \frac{1}{\sqrt{1-\alpha^2}}.n_i^{*} \qquad (6)$$

Dans l'expression (6), on observe que plus le facteur de pondération $\alpha$ est proche de 1, et plus le gain en rapport signal à bruit est important. Cependant, plus $\alpha$ est proche de 1, et plus l'effet mémoire est important également, ce qui est pénalisant en phase d'acquisition ou pour commuter sur un signal reçu d'un niveau plus élevé, comme déjà indiqué plus haut.

Par exemple, si l'on considère $\alpha$ tel que $\frac{1}{1-\alpha} = 16$, on obtient un bon compromis entre des bonnes performances en terme de rapport signal à bruit et un effet mémoire limité. Dans ce cas, l'équation (6) s'écrit :

$$C_i^{**} + n_i^{**} = 16.C_i^{*} + 2,87.n_i^{*}$$

Le gain en rapport S/B est de 14,9 dB, valeur permettant d'améliorer la confiance sur la détection d'un pic fondamental en sortie du filtrage. Cependant, dans le cas d'un canal de transmission fortement perturbé, ce gain en rapport signal à bruit n'est pas suffisant pour obtenir une fiabilité optimale de détection d'un pic de synchronisation.

Le procédé de synchronisation selon ce mode de réalisation met alors en oeuvre une étape de mise en forme 33 du signal en sortie du filtrage RII 32.

5.2.3 Mise en forme (33)

Cette étape de mise en forme du signal en sortie du filtrage RII précédemment décrit est basée sur la période T de 1024 échantillons utilisée pour le calcul de la corrélation (voir paragraphe 5.2.1) et la distance de T/8 entre les pics parasites et le pic fondamental, observée en sortie de l'étape de corrélation (comme illustrée en figure 5b).

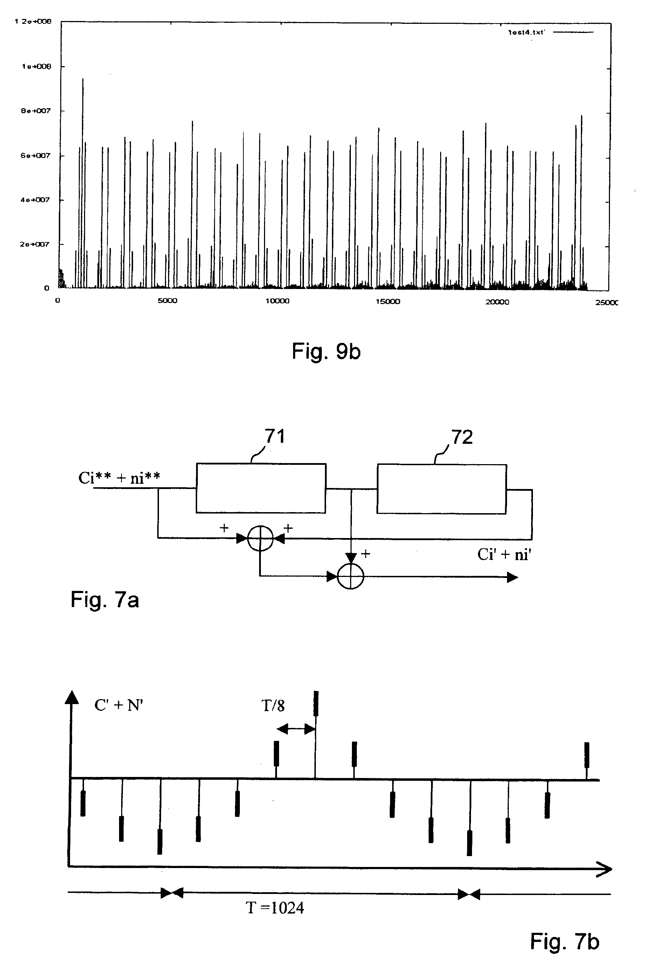

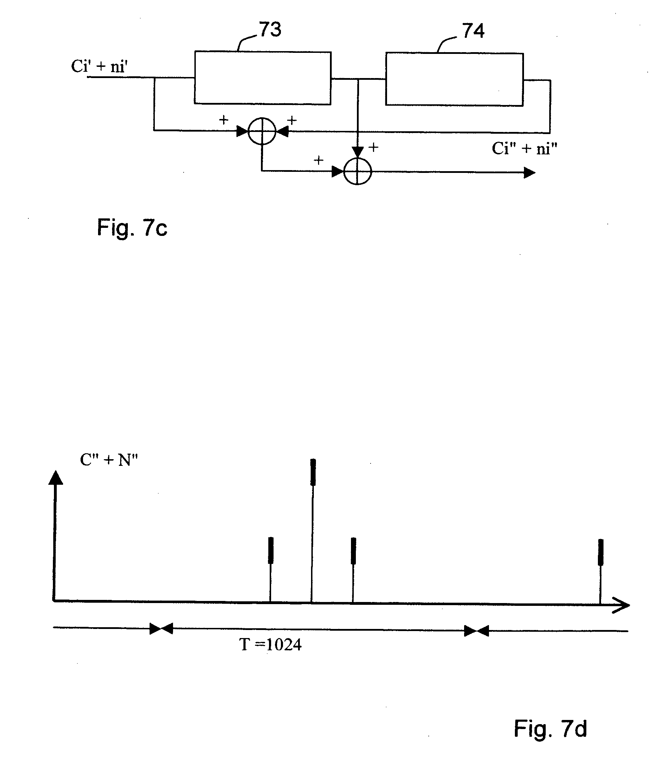

Cette étape de mise en forme est composée elle-même de deux sous-étapes de filtrage, illustrées respectivement par les figures 7a et 7c.

La première étape consiste à appliquer un filtrage soustractif au signal en sortie du filtrage RII, c'est-à-dire à effectuer des soustractions de ce signal avec des versions décalées de lui-même de T/2. De cette manière, le rapport des niveaux entre le pic fondamental et les pics parasites voisins est considérablement augmenté, permettant donc une discrimination plus fiable du pic fondamental par rapport aux pics parasites voisins.

Ce premier filtrage soustractif est mis en oeuvre par deux lignes à retard 71 et 72, de 512 échantillons selon cet exemple, comme illustré en figure 7a.

Un exemple de signal en sortie de ce filtrage soustractif, noté Ci' + ni', est représenté, en fonction du temps, sur la figure 7b.

La soustraction effectuée par ce filtrage entraîne une dégradation de 4,7 dB par rapport au gain en rapport signal à bruit obtenu en sortie du filtrage RII. Malgré cette dégradation, on peut constater que le pic fondamental se distingue nettement des pics parasites voisins, comparativement au signal en sortie de l'étape de corrélation représenté en figure 5b.

Une détection quasiment fiable d'un pic de synchronisation pourrait donc être envisagée à l'issue de cette première sous-étape de filtrage soustractif. Cependant, afin d'améliorer encore les performances de détection, un second filtrage, additif cette fois, est appliqué au signal en sortie du premier filtrage soustractif.

Un exemple de ce filtrage additif est représenté en figure 7c, par la mise en oeuvre de deux lignes à retard 73 et 74, de 128 échantillons.

Ce filtrage tire lui aussi profit de la distance de T/8 entre un pic fondamental et les pics parasites voisins, et permet d'améliorer le rapport signal à bruit.

En effet, le gain en rapport S/B, théoriquement de 1,3 dB pour cette opération de filtrage additif, est en fait supérieur si l'on considère le gain pour la détection du pic fondamental.

En effet, le signal C'' en sortie de ce filtrage soustractif peut s'écrire :

$$C_i'' + n_i'' = C_i' + n_i' + C_{i-128}' + n_{i-128}' + C_{i-256}' + n_{i-256}' \qquad (7)$$

Lorsque le pic fondamental correspond à $C_{i-128}'$, et en supposant que $C_i' \cong C_{i-128}'/2$ et $C_{i-256}' \cong C_{i-128}'/2$, alors l'équation (7) peut s'écrire :

$$C_i'' + n_i'' \cong 2C_{i-128}' + n_i' + n_{i-128}' + n_{i-256}' \qquad (7bis)$$

Le gain en rapport signal à bruit est donc de 6dB pour le pic fondamental et de 4,7 dB pour le bruit, ce qui correspond globalement à un rapport S/B de 1,3dB.

Cependant, si l'on considère que le signal pour un pic parasite voisin du pic fondamental peut s'écrire de la façon suivante :

$$C_{i+128}'' + n_{i+128}'' = C_{i+128}' + n_{i+128}' + C_i' + n_i' + C_{i-128}' + n_{i-128}' \qquad (8)$$

et si l'on considère que $C_{i+128}' \cong -C_{i-128}'/2$, alors on peut écrire la différence de niveau entre le pic fondamental et le pic parasite voisin, en sortie de cette étape de filtrage soustractif, comme suit :

$$C_i'' + n_i'' - C_{i+128}'' - n_{i+128}'' \cong C_{i-128}' + n_{i-256}' - n_{i+128}' \qquad (9)$$

Sachant que l'on a, en entrée, pour la même différence de niveau entre le pic fondamental et le pic parasite voisin, l'expression suivante :

$$C_i' + n_i' - C_{i+128}' - n_{i+128}' \cong C_i'/2 + n_i' - n_{i+128}' \qquad (9bis)$$

Le gain en discrimination entre le pic fondamental et le pic parasite voisin est donc de 3 dB selon cet exemple.

Ainsi, la dégradation en rapport signal à bruit du filtrage soustractif (première sous-étape) est compensée en partie en sortie du filtrage additif.

Un exemple de signal en sortie de ce filtrage additif, noté Ci" + ni", est représenté, en fonction du temps, et seulement pour sa partie positive, sur la figure 7d.

On constate que le rapport entre le niveau le plus faible du pic fondamental (c'est-à-dire le niveau avant la partie représentée en trait gras), et le niveau le plus fort d'un pic parasite voisin (c'est-à-dire le niveau total) est d'au moins 6 dB, quelque soit le niveau des perturbations du canal.

Ce rapport de 6 dB apporte donc une fiabilité suffisante à la détection d'un pic de synchronisation et garantit la robustesse du procédé de synchronisation selon ce mode de réalisation de l'invention.

Le signal C" en sortie de cette étape de mise en forme, après le filtrage soustractif puis le filtrage additif, est donc celui qui va servir à l'étape de détection proprement dite du pic de synchronisation et à la synchronisation du signal reçu, comme décrit au paragraphe 5.2.4 ci-dessous.

Une autre variante de l'étape 33 de mise en forme consiste à prendre en considération le signal en sortie de l'étape de filtrage (32) pour servir de deuxième séquence de référence à une deuxième opération de corrélation.

Un exemple de cette deuxième séquence de référence est représenté en figure 7e, sous la forme d'une moyenne statistique du signal en sortie du filtrage (32).

Dans ce cas, et contrairement à l'opération de corrélation (31) décrite précédemment, cette opération de corrélation prend en considération les valeurs discrètes, et non uniquement les signes.

Cette deuxième corrélation peut s'écrire de la façon suivante :

$$COR2(j) = \sum_{i=1}^{8} Coeff(i).C^*(i.128 + j - 1024),$$

où les coefficients Coeff(i) sont les valeurs représentées sur la figure 7e.

La sortie de cette deuxième étape de corrélation présente un signal analogue à celui en sortie de la première étape de corrélation (figure 5b), avec cependant un niveau du signal utile supérieur.

Ainsi, le gain relatif en rapport S/B après cette deuxième étape de corrélation est très important, pouvant atteindre une dizaine de dB selon les valeurs des coefficients de la deuxième séquence de référence, c'est-à-dire des valeurs moyennes des pics en sortie de l'étape de filtrage (32).

5.2.4 Détection d'un pic de synchronisation (34)

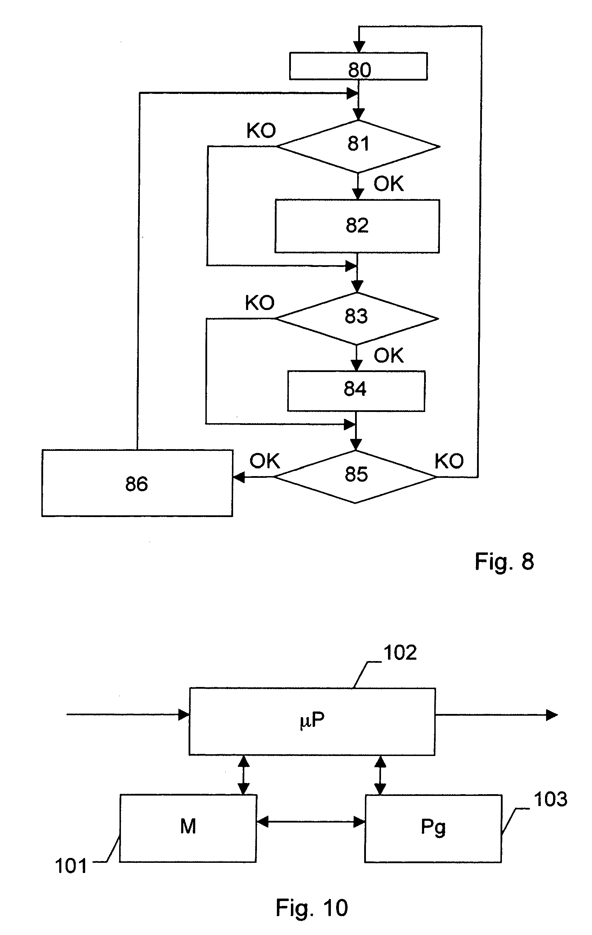

La détection du pic fondamental est effectuée selon un algorithme présenté en figure 8. Cet algorithme est cadencé par un compteur modulo 1024, correspondant au nombre d'échantillons pris en considération pour les étapes précédentes, et correspondant également à une période de quatre symboles.

La valeur de chaque échantillon du signal, sur une période de 1024 échantillons, est associée à une valeur délivrée par le compteur, représentant l'indice de l'échantillon, c'est-à-dire sa position temporelle sur la période considérée. A la fin de la période de 1024 échantillons, la valeur maximale est détectée, par comparaison avec toutes les autres valeurs, et est repérée par son indice associé.

On obtient ainsi la position temporelle de l'échantillon de valeur maximale sur la période considérée.

Cette information de position de l'échantillon de valeur maximale correspond donc à la position du pic fondamental détecté sur la période considérée et va servir pour la génération d'un "top" de synchronisation pour la période suivante.

Ainsi, lors de la réception du signal sur la période suivant celle sur laquelle a été détecté le pic de synchronisation, les échantillons sont également comptés par le compteur modulo 1024, et un "top" de synchronisation est généré lorsque la valeur du compteur courant est égale à l'information de position correspondant au pic fondamental.

Le "top" de synchronisation ainsi généré correspond dans cet exemple au début d'une période de 1024 échantillons, c'est-à-dire au début d'une séquence de quatre symboles, et permet ainsi notamment au récepteur de connaître le début d'une telle séquence pour positionner la fenêtre FFT du démodulateur.

L'algorithme représenté en figure 8 met en oeuvre les variables suivantes :

- Cnt : valeur du compteur s'incrémentant à chaque échantillon, allant de 0 à 1023 ;
- MAX : variable de stockage de la valeur d'échantillon maximale sur une période de 1024 échantillons (initialisée ;
- Indice_Max: correspond à la valeur de Cnt pour l'échantillon de valeur MAX;
- POSITION : correspond à Indice-Max de la période de 1024 échantillons précédente (reste inchangée pendant la période courante).

De plus, l'opérateur <= correspond à une modification de la valeur courante de la variable (à gauche de l'opérateur) par la valeur à droite de l'opérateur.

Au début d'une période de 1024 échantillons sur laquelle on applique l'algorithme, les variables sont initialisées avec les valeurs suivantes :

$$\text{Cnt} = 0, \text{MAX} = \text{valeur de l'échantillon courant C"}(k), \text{Indice\_Max} = \text{POSITION.}$$

Ensuite, le déroulement de l'algorithme est le suivant : le bloc 80 consiste à incrémenter le compteur Cnt : Cnt <= Cnt + 1.

Le bloc 81 consiste à tester si la valeur de l'échantillon courant est supérieure à MAX. Si c'est le cas, on effectue les modifications suivantes, correspondant au bloc 82 : MAX prend la valeur de l'échantillon courant et Indice_Max prend la valeur de Cnt : MAX <= C"(k) et Indice-Max <= Cnt. Sinon, on passe directement au test suivant, réalisé dans le bloc 83, dans lequel on compare la valeur courante du compteur avec la valeur de POSITION : POSITION = Cnt. Si ces deux valeurs sont égales, alors on génère un "top" de synchronisation (bloc 84), sinon, on reprend au bloc 80 si on n'est pas arrivé au dernier échantillon, c'est-à-dire si le compteur est différent de 1023 : Cnt = 1023 (bloc 85).

Si le compteur vaut 1023, alors on met à jour (bloc 86) les variables de la façon suivante : Cnt est remis à 0, POSITION = Indice-Max et MAX prend la valeur par défaut de l'échantillon courant.

Bien entendu, l'invention n'est pas limitée aux exemples de réalisation mentionnés ci-dessus.

En particulier, on notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est mise en oeuvre partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

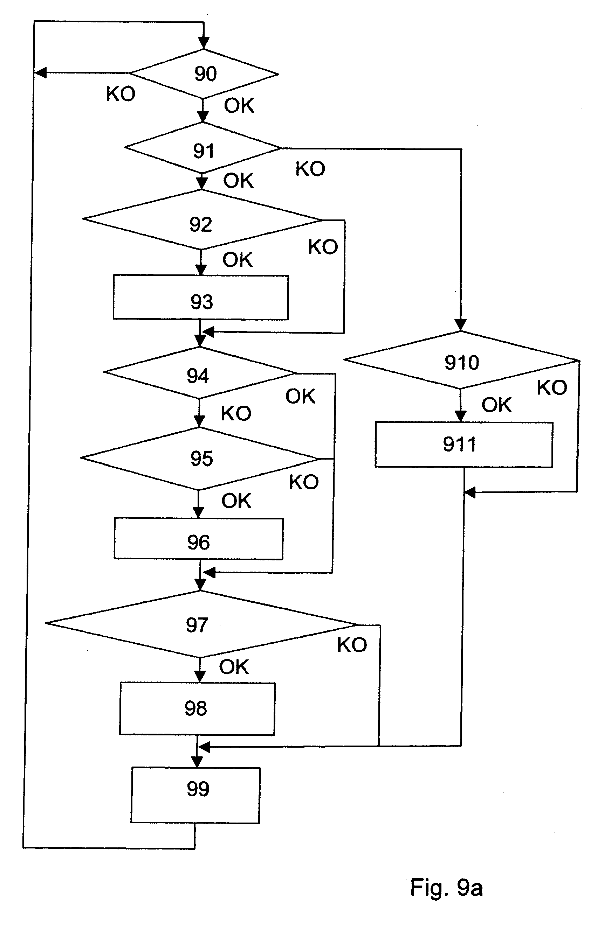

Notamment, l'algorithme en figure 9a présente un exemple de solution logicielle permettant d'améliorer la détection d'un pic de synchronisation. Cette solution est basée sur la mémoire des différentes positions des pics obtenus en sortie de l'étape de corrélation et associe à chaque position un poids Top_trame[n], ou une pondération, permettant d'augmenter la confiance dans la détection du pic fondamental.

On considère que :

- le signe % représente la fonction modulo ;
- Top_trame[indice] représente le poids, ou la pondération, pour un indice (initialisé à -1 pour l'ensemble du tableau Top_trame[n] pour n allant de 0 à T_pn-1) ;
- Top_min = -1 et représente le poids minimal attribué à un indice ;
- Top-max = 10 et représente le poids maximal attribué à un indice;
- Indice_max représente la position, ou l'indice, du pic maximal (initalisé à -1) ;
- Indice_top représente l'indice de référence pour la synchronisation (c'est-à-dire l'indice du pic fondamental détecté) (initialisé à 0) ;
- T-pn représente la période considérée pour la corrélation et la détection du pic fondamental (ici, 4 symboles, donc 1024 échantillons).

Les différentes étapes mises en oeuvre dans l'algorithme sont les suivantes :

- étape 90 : test si la fin de la période est atteinte (ou test de la longueur de la séquence de référence) :

$$(i \% T\_pn) = T\_pn\text{-}1$$

- étape 91 : test de la présence des pics de corrélation :

indice_max < > -1

  - étape 910 : test si le poids de l'indice de référence est à la valeur minimum sinon décrémentation de 1 (étape 911) Top_trame[indice_top] > Top_min
  - étape 911 :

    Top_trame[indice_top] - = 1

- étape 92 : test sur la valeur du poids de l'indice :

Top_trame[indice_max] < Top_max

- étape 93 : augmentation du poids de l'indice courant :

Top_trame[indice_max] + = 1

- étape 94 : test si l'indice du pic détecté est identique à l'indice de référence issue de la décision précédente :

indice_max = indice_top

- étape 95 : test si le poids de l'indice de référence est à la valeur minimum sinon décrémentation de 1 (étape 96) Top_trame[indice_top] > Top_min
- étape 96 : diminution du poids de l'indice de référence :

Top_trame[indice_top] - = 1

- étape 97 : comparaison du poids des deux indices (indice de référence et position du pic maximum) :

Top_trame[indice_max] > Top_trame[indice_top]

- étape 98 : affectation d'un nouvel indice de référence :

indice_top = indice_max

- étape 99 : réinitialisation des variables ;

P_corr_max = 0
indice_max = -1

La figure 9b, sur laquelle l'axe des ordonnées correspond à la puissance (c'est-à-dire au module au carré) du signal, représente un exemple de signal en sortie de cette étape logicielle, effectuée après l'étape de corrélation (31 ).

*5.3 Structure du dispositif de synchronisation*

On présente finalement, en relation avec la figure 10, la structure simplifiée d'un dispositif de synchronisation mettant en oeuvre une technique de synchronisation d'un signal multiporteuse selon le mode de réalisation particulier décrit ci-dessus.

Un tel dispositif de synchronisation comprend une mémoire 101 constituée d'une mémoire tampon, une unité de traitement 102, équipée par exemple d'un microprocesseur μP, et pilotée par le programme d'ordinateur 103, mettant en oeuvre le procédé de synchronisation selon l'invention.

A l'initialisation, les instructions de code du programme d'ordinateur 103 sont par exemple chargées dans une mémoire RAM avant d'être exécutées par le processeur de l'unité de traitement 102. L'unité de traitement 102 reçoit en entrée au moins une séquence de référence (issue d'un émetteur ou regénérée au niveau du récepteur) et le signal multiporteuse à synchroniser. Le microprocesseur de l'unité de traitement 102 met en oeuvre les étapes du procédé de synchronisation décrit précédemment, selon les instructions du programme d'ordinateur 103, pour détecter un pic de synchronisation et synchroniser le signal reçu. Pour cela, le dispositif de synchronisation comprend, outre la mémoire tampon 101, des moyens d'obtention d'une séquence d'un signal de référence, dite séquence de référence, représentative de l'emplacement d'au moins un desdits pilotes dudit signal multiporteuse, des moyens de détermination, pour une séquence dudit signal reçu de même longueur que ladite séquence de référence, dite séquence de détermination, d'un pic de synchronisation, à partir d'une corrélation entre ladite séquence de référence et ladite séquence de détermination et des moyens de synchronisation d'au moins une séquence suivant temporellement ladite séquence de détermination, à partir dudit pic de synchronisation. Ces moyens sont pilotés par le microprocesseur de l'unité de traitement 102.

**Revendications**

1. Procédé de synchronisation d'un signal multiporteuse reçu par un récepteur, ledit signal multiporteuse comprenant à l'émission un ensemble d'éléments de données et un ensemble d'éléments de référence appelés pilotes, la valeur et l'emplacement desdits pilotes à l'émission étant connus dudit récepteur, **caractérisé en ce qu'**il comprend les étapes suivantes :

   - obtention par ledit récepteur d'une séquence d'un signal de référence, dite séquence de référence, représentative de l'emplacement d'au moins un desdits pilotes dudit signal multiporteuse ;
   - obtention par ledit récepteur d'une séquence dudit signal reçu, dite séquence de détermination ;
   - détermination, pour ladite séquence de détermination, d'un pic de synchronisation, à partir d'une corrélation entre ladite séquence de référence et ladite séquence de détermination ;
   - synchronisation d'au moins une séquence suivant temporellement ladite séquence de détermination, à partir dudit pic de synchronisation.

2. Procédé de synchronisation selon la revendication 1, **caractérisé en ce que** ladite étape d'obtention d'une séquence de référence comprend une étape de réception par ledit récepteur d'un signal comprenant des pilotes situés aux mêmes emplacements temps/fréquence que les pilotes dudit signal multiporteuse.

3. Procédé de synchronisation selon la revendication 1, **caractérisé en ce que** ladite étape d'obtention d'une séquence de référence comprend une étape de génération d'un signal de référence comprenant des pilotes situés aux mêmes emplacements temps/fréquence que les pilotes dudit signal multiporteuse.

4. Procédé de synchronisation selon l'une quelconque des revendications 1 à 3, **caractérisé en ce que** ladite séquence de détermination est de même longueur que ladite séquence de référence.

5. Procédé de synchronisation selon l'une quelconque des revendications 1 à 4, **caractérisé en ce que** ladite étape de détermination d'un pic de synchronisation comprend :

   - une étape de corrélation de ladite séquence de détermination et de ladite séquence de référence, délivrant une réponse de corrélation ;
   - une étape de filtrage de ladite réponse de corrélation, délivrant une réponse de corrélation filtrée ;
   - une étape de détection d'un pic de synchronisation à partir de ladite réponse de corrélation filtrée, délivrant une information de position correspondant audit pic de synchronisation.

6. Procédé de synchronisation selon la revendication 5, **caractérisé en ce que** ladite étape de détermination d'un pic de synchronisation comprend également une étape de mise en forme de ladite réponse de corrélation filtrée, délivrant une réponse de corrélation améliorée, et **en ce que** ladite étape de détection d'un pic de synchronisation s'effectue à partir de ladite réponse de corrélation améliorée.

7. Procédé de synchronisation selon la revendication 6, **caractérisé en ce que** ladite étape de mise en forme comprend :

- une première étape de filtrage soustractif de ladite réponse de corrélation filtrée avec au moins une version décalée temporellement de ladite réponse de corrélation filtrée, délivrant une réponse intermédiaire ;
- une deuxième étape de filtrage additif de ladite réponse intermédiaire avec au moins une version décalée temporellement de ladite réponse intermédiaire, délivrant ladite réponse de corrélation améliorée.

8. Procédé de synchronisation selon la revendication 6, **caractérisé en ce que** ladite étape de mise en forme correspond à une deuxième corrélation effectuée à l'aide de ladite réponse de corrélation filtrée et délivrant une réponse de corrélation améliorée.

9. Procédé de synchronisation selon l'une quelconque des revendications 5 à 8, **caractérisé en ce que** ladite étape de synchronisation comprend, pour la séquence suivant temporellement ladite séquence de détermination :

- une comparaison d'une position d'un échantillon discret de ladite séquence suivante avec ladite information de position ;
- une génération d'un "top" de synchronisation quand le résultat de la comparaison est positif.

10. Procédé d'émission d'un signal multiporteuse comprenant un ensemble d'éléments de données et un ensemble d'éléments de référence appelés pilotes, la valeur et l'emplacement desdits pilotes à l'émission étant connus d'au moins un récepteur destiné à effectuer une réception dudit signal multiporteuse, **caractérisé en ce qu'**il comprend les étapes suivantes :

- émission d'un signal de référence comprenant des pilotes situés aux mêmes emplacements temps/fréquence que les pilotes dudit signal multiporteuse ;
- émission dudit signal multiporteuse.

11. Procédé d'émission d'un signal multiporteuse selon la revendication 10, **caractérisé en ce que** ledit signal multiporteuse est de type OFDM/OQAM ou BFDM/OQAM.

12. Procédé d'émission d'un signal multiporteuse selon l'une quelconque des revendications des revendications 10 et 11, **caractérisé en ce que** ledit ensemble de pilotes est composé d'un préambule et/ou de pilotes répartis.

13. Dispositif de synchronisation d'un signal multiporteuse reçu par un récepteur (23), ledit signal multiporteuse comprenant à l'émission un ensemble d'éléments de données et un ensemble d'éléments de référence appelés pilotes, la valeur et l'emplacement desdits pilotes à l'émission étant connus dudit récepteur, **caractérisé en ce qu'**il comprend :

- des moyens d'obtention par ledit récepteur d'une séquence d'un signal de référence, dite séquence de référence, représentative de l'emplacement d'au moins un desdits pilotes dudit signal multiporteuse ;
- des moyens d'obtention par ledit récepteur d'une séquence dudit signal reçu, dite séquence de détermination ;
- des moyens de détermination, pour ladite séquence de détermination, d'un pic de synchronisation, à partir d'une corrélation entre ladite séquence de référence et ladite séquence de détermination ;
- des moyens de synchronisation d'au moins une séquence suivant temporellement ladite séquence de détermination, à partir dudit pic de synchronisation.

14. Dispositif d'émission (21) d'un signal multiporteuse comprenant un ensemble d'éléments de données et un ensemble d'éléments de référence appelés pilotes, la valeur et l'emplacement desdits pilotes à l'émission étant connus d'au moins un récepteur destiné à effectuer une réception dudit signal multiporteuse, **caractérisé en ce qu'**il comprend :

- des moyens d'émission d'un signal de référence comprenant des pilotes, situés aux mêmes emplacements temps/fréquence que les pilotes dudit signal multiporteuse ;
- des moyens d'émission dudit signal multiporteuse.

15. Produit programme d'ordinateur téléchargeable depuis un réseau de communication et/ou enregistré sur un support lisible (103) par ordinateur et/ou exécutable par un processeur (102), **caractérisé en ce qu'**il comprend des instructions de code de programme pour la mise en oeuvre du procédé de synchronisation selon l'une au moins des revendications 1 à 9.

16. Produit programme d'ordinateur téléchargeable depuis un réseau de communication et/ou enregistré sur un support lisible (103) par ordinateur et/ou exécutable par un processeur (102), **caractérisé en ce qu'**il comprend des instructions de code de programme pour la mise en oeuvre du procédé d'émission selon l'une au moins des revendications 10 à 12.

**Patentansprüche**

1. Verfahren zum Synchronisieren eines von einem Empfänger empfangenen Mehrfachträgersignals, wobei das Mehrfachträgersignal ein Aussenden einer Gesamtheit von Datenelementen und eine Gesamtheit von Referenzelementen, die Pilotelemente genannt werden, enthält, wobei der Wert und der Ort der Pilotelemente beim Aussenden dem Empfänger bekannt sind,
   **dadurch gekennzeichnet, dass** es die folgenden Schritte umfasst:

   - Erhalten durch den Empfänger einer Folge aus einem Referenzsignal, die Referenzfolge genannt wird und den Ort wenigstens eines der Pilotelemente des Mehrfachträgersignals repräsentiert;
   - Erhalten durch den Empfänger einer Folge des empfangenen Signals, die Bestimmungsfolge genannt wird;
   - Bestimmen für die Bestimmungsfolge einer Synchronisationsspitze anhand einer Korrelation zwischen der Referenzfolge und der Bestimmungsfolge;
   - Synchronisieren wenigstens einer Folge, die der Bestimmungsfolge zeitlich folgt, anhand der Synchronisationsspitze.

2. Synchronisationsverfahren nach Anspruch 1, **dadurch gekennzeichnet, dass** der Schritt zum Erhalten einer Referenzfolge einen Schritt zum Empfangen durch den Empfänger eines Signals, das Pilotelemente enthält, die sich an denselben Zeit/Frequenz-Orten wie die Pilotelemente des Mehrfachträgersignals befinden, umfasst.

3. Synchronisationsverfahren nach Anspruch 1, **dadurch gekennzeichnet, dass** der Schritt zum Erhalten einer Referenzfolge einen Schritt zum Erzeugen eines Referenzsignals, das Pilotelemente enthält, die sich an denselben Zeit/Frequenz-Orten wie die Pilotelemente des Mehrfachträgersignals befinden, umfasst.

4. Synchronisationsverfahren nach einem der Ansprüche 1 bis 3, **dadurch gekennzeichnet, dass** die Bestimmungsfolge die gleiche Länge wie die Referenzfolge hat.

5. Synchronisationsverfahren nach einem der Ansprüche 1 bis 4, **dadurch gekennzeichnet, dass** der Schritt des Bestimmens einer Synchronisationsspitze Folgendes umfasst:

   - einen Schritt des Korrelierens der Bestimmungsfolge und der Referenzfolge, was eine Korrelationsantwort ergibt;
   - einen Schritt des Filterns der Korrelationsantwort, was eine gefilterte Korrelationsantwort ergibt;
   - einen Schritt des Detektierens einer Synchronisationsspitze anhand der gefilterten Korrelationsantwort, was Positionsinformationen, die der Synchronisationsspitze entsprechen, ergibt.

6. Synchronisationsverfahren nach Anspruch 5, **dadurch gekennzeichnet, dass** der Schritt des Bestimmens einer Synchronisationsspitze außerdem einen Schritt des Formens der gefilterten Korrelationsantwort umfasst, was eine verbesserte Korrelationsantwort ergibt, und dass der Schritt des Detektierens einer Synchronisationsspitze anhand der verbesserten Korrelationsantwort ausgeführt wird.

7. Synchronisationsverfahren nach Anspruch 6, **dadurch gekennzeichnet, dass** der Formungsschritt Folgendes umfasst:

   - einen ersten Schritt des subtraktiven Filters der gefilterten Korrelationsantwort mit wenigstens einer zeitlich versetzten Version der gefilterten Korrelationsantwort, was eine Zwischenantwort ergibt;
   - einen zweiten Schritt des additiven Filters der Zwischenantwort mit wenigstens einer zeitlich versetzten Version der Zwischenantwort, was die verbesserte Korrelationsantwort ergibt.

8. Synchronisationsverfahren nach Anspruch 6, **dadurch gekennzeichnet, dass** der Formungsschritt einer zweiten Korrelation entspricht, die mit Hilfe der gefilterten Korrelationsantwort ausgeführt wird und eine verbesserte Korrelationsantwort ergibt.

9. Synchronisationsverfahren nach einem der Ansprüche 5 bis 8, **dadurch gekennzeichnet, dass** der Synchronisationsschritt für die Folge, die der Bestimmungsfolge zeitlich nachfolgt, Folgendes umfasst:

- Vergleichen einer Position eines diskreten Abtastwerts der folgenden Folge mit den Positionsinformationen;
- Erzeugen eines Synchronisations-"Scheitelwerts", wenn das Vergleichsergebnis positiv ist.

10. Verfahren zum Senden eines Mehrfachträgersignals, das eine Gesamtheit von Datenelementen und eine Gesamtheit von Referenzelementen, die Pilotelemente genannt werden, umfasst, wobei der Wert und der Ort der Pilotelemente beim Senden wenigstens einem Empfänger bekannt sind, der dazu bestimmt ist, einen Empfang des Mehrfachträgersignals auszuführen, **dadurch gekennzeichnet, dass** es die folgenden Schritte umfasst:

- Aussenden eines Referenzsignals, das Pilotelemente enthält, die sich an denselben Zeit/Frequenz-Orten wie die Pilotelemente des Mehrfachträgersignals befinden;
- Aussenden des Mehrfachträgersignals.

11. Verfahren zum Aussenden eines Mehrfachträgersignals nach Anspruch 10, **dadurch gekennzeichnet, dass** das Mehrfachträgersignal vom OFDM/OQAM-Typ oder vom BFDM/OQAM-Typ ist.

12. Verfahren zum Aussenden eines Mehrfachträgersignals nach einem der Ansprüche 10 und 11, **dadurch gekennzeichnet, dass** die Gesamtheit von Pilotelementen aus einem Kopfsatz und/oder aus verteilten Pilotelementen aufgebaut ist.

13. Vorrichtung zum Synchronisieren eines von einem Empfänger (23) empfangenen Mehrfachträgersignals, wobei das Mehrfachträgersignal beim Aussenden eine Gesamtheit von Datenelementen und eine Gesamtheit von Referenzelementen, die Pilotelemente genannt werden, enthält, wobei der Wert und der Ort der Pilotelemente beim Aussenden dem Empfänger bekannt sind, **dadurch gekennzeichnet, dass** sie Folgendes umfasst:

- Mittel zum Erhalten durch den Empfänger einer Folge eines Referenzsignals, die Referenzfolge genannt wird und den Ort wenigstens eines der Pilotelemente des Mehrfachträgersignals repräsentiert;
- Mittel zum Erhalten durch den Empfänger einer Folge des empfangenen Signals, die Bestimmungsfolge genannt wird;
- Mittel zum Bestimmen für die Bestimmungsfolge einer Synchronisationsspitze anhand einer Korrelation zwischen der Referenzfolge und der Bestimmungsfolge;
- Mittel zum Synchronisieren wenigstens einer Folge, die der Bestimmungsfolge zeitlich folgt, anhand der Synchronisationsspitze.

14. Vorrichtung (21) zum Aussenden eines Mehrfachträgersignals, das eine Gesamtheit von Datenelementen und eine Gesamtheit von Referenzelementen, die Pilotelemente genannt werden, enthält, wobei der Wert und der Ort der Pilotelemente beim Aussenden wenigstens einem Empfänger bekannt sind, der dazu bestimmt ist, einen Empfang des Mehrfachträgersignals auszuführen, **dadurch gekennzeichnet, dass** sie Folgendes umfasst:

- Mittel zum Aussenden eines Referenzsignals, das Pilotelemente enthält, die sich an denselben Zeit/Frequenz-Orten wie die Pilotelemente des Mehrfachträgersignals befinden;
- Mittel zum Aussenden des Mehrfachträgersignals.

15. Computerprogrammprodukt, das von einem Kommunikationsnetz fernladbar ist und/oder in einem durch einen Computer lesbaren Träger (103) aufgezeichnet ist und/oder durch einen Prozessor (102) ausführbar ist, **dadurch gekennzeichnet, dass** es Programmcodebefehle für die Ausführung des Synchronisationsverfahrens nach wenigstens einem der Ansprüche 1 bis 9 umfasst.

16. Computerprogrammprodukt, das von einem Kommunikationsnetz fernladbar ist und/oder in einem durch einen Computer lesbaren Träger (103) aufgezeichnet ist und/oder durch einen Prozessor (102) ausführbar ist, **dadurch gekennzeichnet, dass** es Programmcodebefehle für die Ausführung des Sendeverfahrens nach wenigstens einem der Ansprüche 10 bis 12 umfasst.

**Claims**

1. Method of synchronization of a multicarrier signal received by a receiver, said multicarrier signal comprising on emission a set of data elements and a set of reference elements called pilots, the value and the location of said pilots on emission being known to said receiver, **characterized in that** it comprises the following steps:

   - obtaining by said receiver of a sequence of a reference signal, termed the reference sequence, representative of the location of at least one of said pilots of said multicarrier signal;
   - obtaining by said receiver of a sequence of said signal received, termed the determination sequence;
   - determination, for said determination sequence, of a synchronization peak, on the basis of a correlation between said reference sequence and said determination sequence;
   - synchronization of at least one sequence temporally following said determination sequence, on the basis of said synchronization peak.

2. Method of synchronization according to Claim 1, **characterized in that** said step of obtaining a reference sequence comprises a step of reception by said receiver of a signal comprising pilots situated at the same time/frequency locations as the pilots of said multicarrier signal.

3. Method of synchronization according to Claim 1, **characterized in that** said step of obtaining a reference sequence comprises a step of generating a reference signal comprising pilots situated at the same time/frequency locations as the pilots of said multicarrier signal.

4. Method of synchronization according to any one of Claims 1 to 3, **characterized in that** said determination sequence is of the same length as said reference sequence.

5. Method of synchronization according to any one of Claims 1 to 4, **characterized in that** said step of determining a synchronization peak comprises:

   - a step of correlating said determination sequence and said reference sequence, delivering a correlation response;
   - a step of filtering said correlation response, delivering a filtered correlation response;
   - a step of detecting a synchronization peak on the basis of said filtered correlation response, delivering an item of position information corresponding to said synchronization peak.

6. Method of synchronization according to Claim 5, **characterized in that** said step of determining a synchronization peak also comprises a step of shaping said filtered correlation response, delivering an improved correlation response, and **in that** said step of detecting a synchronization peak is performed on the basis of said improved correlation response.

7. Method of synchronization according to Claim 6, **characterized in that** said shaping step comprises:

   - a first step of subtractive filtering of said filtered correlation response with at least one temporally shifted version of said filtered correlation response, delivering an intermediate response;
   - a second step of additive filtering of said intermediate response with at least one temporally shifted version of said intermediate response, delivering said improved correlation response.

8. Method of synchronization according to Claim 6, **characterized in that** said shaping step corresponds to a second correlation performed with the aid of said filtered correlation response and delivering an improved correlation response.

9. Method of synchronization according to any one of Claims 5 to 8, **characterized in that** said synchronization step comprises, for the sequence temporally following said determination sequence:

   - a comparison of a position of a discrete sample of said following sequence with said item of position information;
   - a generation of a synchronization "pip" when the result of the comparison is positive.

10. Method of emission of a multicarrier signal comprising a set of data elements and a set of reference elements called pilots, the value and the location of said pilots on emission being known to at least one receiver intended to perform a reception of said multicarrier signal, **characterized in that** it comprises the following steps:

- emission of a reference signal comprising pilots situated at the same time/frequency locations as the pilots of said multicarrier signal;
- emission of said multicarrier signal.

11. Method of emission of a multicarrier signal according to Claim 10, **characterized in that** said multicarrier signal is of OFDM/OQAM or BFDM/OQAM type.

12. Method of emission of a multicarrier signal according to any one of the claims of Claims 10 and 11, **characterized in that** said set of pilots is composed of a preamble and/or of distributed pilots.

13. Device for synchronizing a multicarrier signal received by a receiver (23), said multicarrier signal comprising on emission a set of data elements and a set of reference elements called pilots, the value and the location of said pilots on emission being known to said receiver, **characterized in that** it comprises:

- means of obtaining by said receiver a sequence of a reference signal, termed the reference sequence, representative of the location of at least one of said pilots of said multicarrier signal;
- means of obtaining by said receiver a sequence of said signal received, termed the determination sequence;
- means of determination, for said determination sequence, of a synchronization peak, on the basis of a correlation between said reference sequence and said determination sequence;
- means of synchronization of at least one sequence temporally following said determination sequence, on the basis of said synchronization peak.

14. Device (24) for emitting a multicarrier signal comprising a set of data elements and a set of reference elements called pilots, the value and the location of said pilots on emission being known to at least one receiver intended to perform a reception of said multicarrier signal, **characterized in that** it comprises:

- means of emission of a reference signal comprising pilots, situated at the same time/frequency locations as the pilots of said multicarrier signal;
- means of emission of said multicarrier signal.

15. Computer program product downloadable from a communication network and/or recorded on a medium readable (103) by computer and/or executable by a processor (102), **characterized in that** it comprises program code instructions for the implementation of the method of synchronization according to at least one of Claims 1 to 9.

16. Computer program product downloadable from a communication network and/or recorded on a medium readable (103) by computer and/or executable by a processor (102), **characterized in that** it comprises program code instructions for the implementation of the method of emission according to at least one of Claims 10 to 12.

Fig. 1

Fig. 2a

Fig. 2b

Fig. 3

Fig. 4a

Fig. 4b

Fig. 5a

**Fig. 5b**

**Fig. 6**

**Fig. 7e**

Fig. 9b

Ci** + ni**

71    72

+    +

Ci' + ni'

+

Fig. 7a

C' + N'

T/8

T =1024

Fig. 7b

Ci' + ni'

73

74

+ +

+

Ci" + ni"

+

**Fig. 7c**

C" + N"

T =1024

**Fig. 7d**

Fig. 8

Fig. 10

Fig. 9a

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006025937 A

**Littérature non-brevet citée dans la description**

- **B.LE FLOCH, M.ALARD ; C.BERROU.** Coded Orthogonal Frequency Division Multiplex. *Proceedings in the IEEE,* Juin 1995, vol. 83